# EUROPEAN PATENT APPLICATION

(11) **EP 2 503 761 A1**
(43) Date of publication of application: **26.09.2012**
(21) Application number: 11169860.1
(22) Date of filing: 14.06.2011
(51) Int. Cl.: H04L 29/08, H04M 1/253, H04M 7/00, H04L 29/06

(54) **Mobile communication system**

(30) Priority: 25.03.2011 US 65611
(71) Applicant: Mitel Networks Corporation, Ottawa, ON K2K 2W7 (CA)
(72) Inventor: Hillier, Peter Matthew, Ottawa, Ontario K2T 0A7 (CA); Erb, Paul, Ottawa, Ontario K1N 6M5 (CA)
(74) Representative: Venner Shipley LLP

(57) **Abstract**

Generally described, the present disclosure relates to communications, and more specifically, to localizing devices with a communication system to establish phone services. According to one illustrative embodiment, where the communication system is within a hotel, a traveller can download a voice over internet protocol (VoIP) client onto their mobile device. The VoIP client default configuration can then establish a connection between the mobile device and the communication system. Typically, the VoIP client has to be pre-authorised before registering with the communication system. After registering, all subsequent phone service can then be provided to the mobile device by the VoIP client in association with the hotel phone. Upon check-out, the VoIP client can be removed or disabled and the configuration connection to the communication system can be discontinued.

## Description

This generally relates to communication, and more particularly, although not exclusively to setting up devices with a communication system for establishing local services.

Today, travellers rely more heavily on the use of their mobile device to stay in communication. While booked into a hotel, the traveller can be contacted either through their hotel room telephone number or through their mobile device. Present systems allow for the traveller to be reached at their mobile device regardless of whether they are called on their personal phone number, their corporate extension or at their hotel room telephone number. While this improves availability, it results in significant additional toll charges as there are often fees associated with mobile device use when outside of the local coverage area.

Calls made from a mobile device are also subject to additional toll charges. The traveller can place a call using either their corporate communication system or their hotel's communication system prior to or as part of placing a call. When using the hotel's communication system, there are many issues with voice over internet protocol (VoIP) client compatibility. For example, not all VoIP clients work with every service provider. Furthermore, extensive client configuration is required that is often beyond the end user's capability. Administration actions can be required to accept the VoIP client on the wireless network and program it into the service provider.

To overcome these challenges, the traveller can subscribe to a plan with the mobile phone service provider for reducing the additional expense involved on calls outside the local coverage area. These plans, however, represent significant expense depending on the nature of the contract involved. Alternatively, the traveller can choose to not use their mobile device to answer and place calls and instead use a telephone provided by the hotel or alternate phone service provider with Internet or wireless client capability.

Another mechanism for reducing charges to a traveller's mobile device is to replace the subscriber identity module (SIM) card that changes the service provider to one or more other providers which maintain an appropriate coverage area where a traveller is staying. However, this requires the individual to be actively involved in the change and can result in considerable toll charges when not managed correctly. The traveller can also download and install a VoIP client approved by the mobile phone service provider. Nonetheless, this requires addition configuration on the mobile device, and additional arrangements within the mobile phone service provider network to link the device to the hotel room phone.

The traveller can have their own VoIP client, but in order to integrate this into the hotel communication system, significant configuration is required. Furthermore, there is no guarantee that the VoIP client will operate correctly with the hotel communication system. A need therefore exists to provide a VoIP client to operate on the mobile device that automatically pairs itself with a room number as a dynamic extension or personal ring group with the hotel room phone and associated communication system instead of through the mobile phone service provider. Furthermore, the service provider and WiFi network access should be approved allowing the mobile device to originate and receive calls over WiFi or other medium.

The novel features believed to be characteristic of the disclosure are set forth in the appended claims. In the descriptions that follow, like parts are marked throughout the specification and drawings with the same numerals, respectively. The drawing figures are not necessarily drawn to scale and certain figures can be shown in exaggerated or generalised form in the interest of clarity and conciseness. The disclosure itself, however, as well as a preferred mode of use, further objectives and advantages thereof, will be best understood by reference to the following detailed description of illustrative embodiments when read in conjunction with the accompanying drawings, wherein:
Figure 1 is a block diagram representing an illustrative environment for localizing devices to a communication system in accordance with one aspect of the present disclosure;
Figure 2 is a flow chart depicting exemplary processes for setting up a device at check-in in accordance with one aspect of the present disclosure;
Figure 3 is a flow chart showing exemplary processes for localizing the device in accordance with one aspect of the present disclosure;
Figure 4 is an illustrative table showing information for the device at setup in accordance with one aspect of the present disclosure;
Figure 5 is an illustrative table depicting information for multiple devices connected with the communication system in accordance with one aspect of the present disclosure; and
Figure 6 is an illustrative table with the information removed in accordance with one aspect of the present disclosure.

The description set forth below in connection with the appended drawings is intended as a description of presently preferred embodiments of the disclosure and is not intended to represent the only forms in which the present disclosure can be constructed and/or utilised. The description sets forth the functions and the sequence of steps for constructing and operating the disclosure in connection with the illustrated embodiments. It is to be understood, however, that the same or equivalent functions and sequences can be accomplished by different embodiments that are also intended to be encompassed within the spirit and scope of this disclosure.

Generally described, the present disclosure relates to communications, and more specifically, to localizing devices with a wireless communication system to establish services. According to one illustrative embodiment, where the communication system is within a hotel, a traveller can download a voice over internet protocol (VoIP) client onto their mobile device. The VoIP client default configuration can then establish a connection between the mobile device and the communication system. Typically, the VoIP client is pre-authorised before registering with the communication system. After registration, all subsequent phone services can be provided to the mobile device by the VoIP client in association with the hotel phone. Upon check-out, the VoIP client can be removed or disabled from the mobile device and the configuration connection to the communication system can be discontinued.

Numerous advantages can be provided as shown by the illustrative embodiment described above. Phone charges associated with most mobile phone networks can be reduced or removed by routing incoming and outgoing calls through the communication system. The communication system can provide localised phone services independent of call origination. The mobile phone service provider is typically not involved in call delivery thus eliminating associated usage or toll charges. Localised phone services can also be available wherever connectivity is provided between the VoIP client and the communication system, regardless of mobile phone location. Many additional features and elements of the present disclosure will become apparent to those of relevant skill in the relevant art as provided for in the following description.

The communication system having localised devices can be integrated into other businesses, for example, coffee shops. In addition, the communication system can provide short message service (SMS) and multimedia messaging service (MMS), e-mail, Internet access, data transfers, etc. and is not limited to phone services. The localised devices do not necessarily have to be mobile and instead can include stationary devices such as desktop computers, tablets or the like. Throughout the present disclosure, WiFi is primarily described as being used with the VoIP client operating on the device. However, other types of networks can be used, for example, picocell, femotocell, or other wireless network technologies.

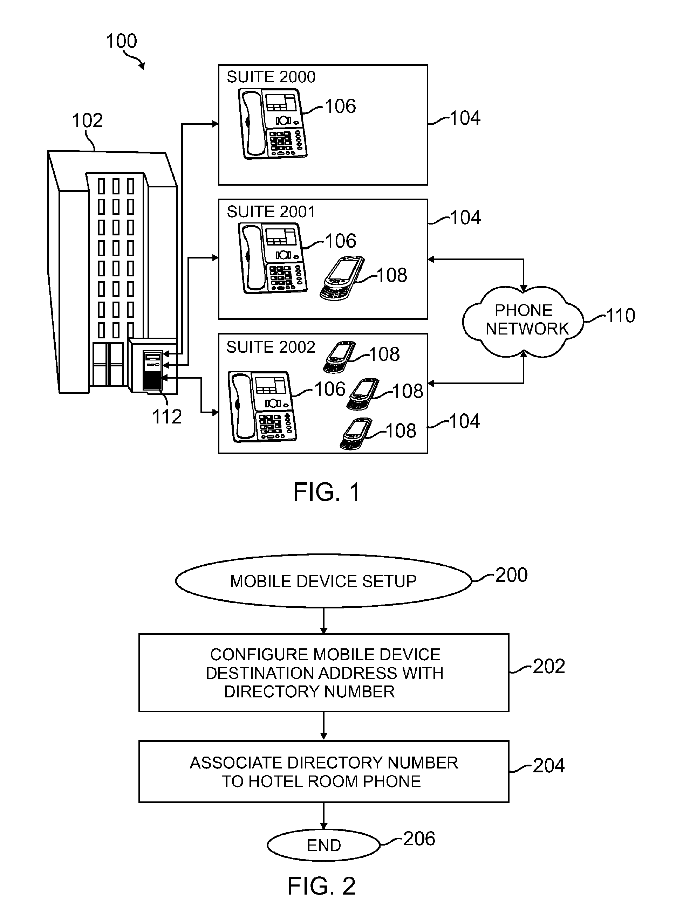

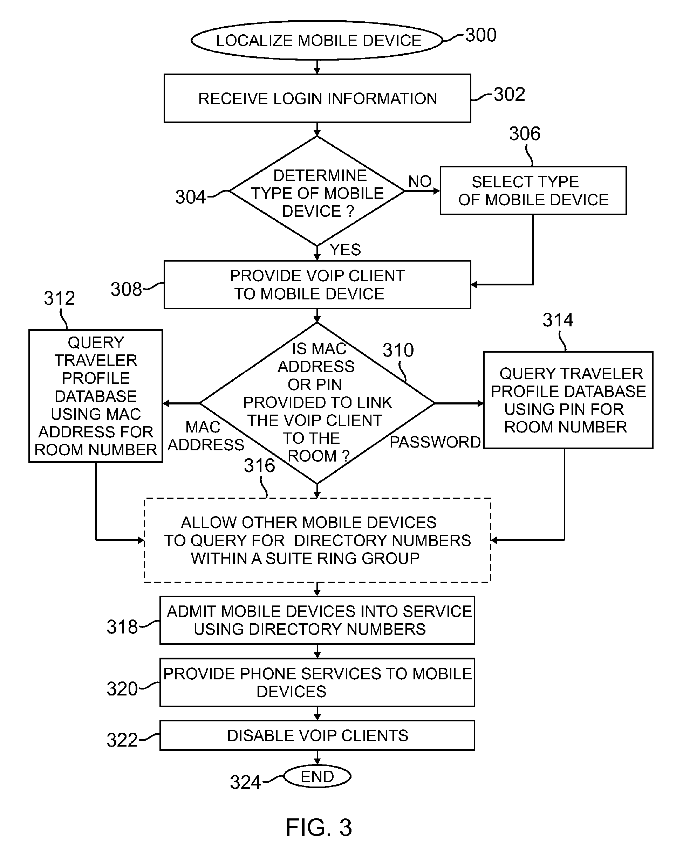

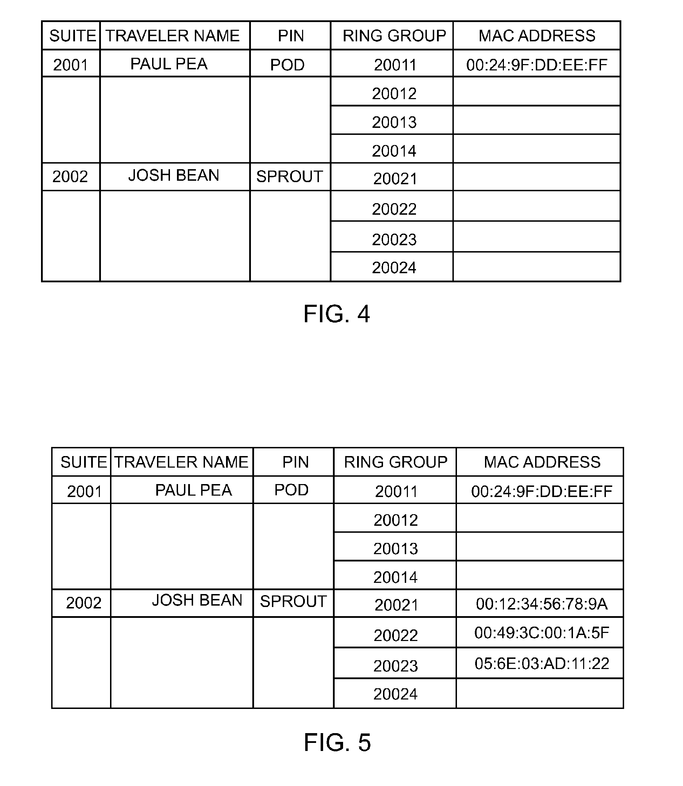

Before describing embodiments of the present disclosure, an exemplary environment for localizing devices with the communication system will be described in Figure 1. Following, Figures 2 and 3 provide flow charts that describe illustrative processes for localizing the devices. Figures 4 through 6 depict tables for managing the devices.

Turning now to Figure 1, a block diagram representing an illustrative environment 100 for localizing devices 108 to a communication system 112 in accordance with one aspect of the present disclosure is provided. The communication system 112 can be provided in a hotel 102 with the communication system 112 facilitating incoming and outgoing calls to each of the rooms 104. The communication system 112 can include one or more computing systems and is not limited to a single entity. Typically, the communication system 112 can take the form of a server having a processing unit, system memory, and system bus that operatively couples various system components. A hard disk drive, magnetic disk drive, optical disk drive and their associated computer-readable medium can provide nonvolatile storage of computer-readable instructions and data structures for the communication system 112. In some embodiments, the communication system 112 can be a private branch exchange, known to those skilled in the relevant art.

The communication system 112 can be connected to room phones 106. While a small subset of rooms 104 are shown, the hotel 102 can include many additional rooms 104, and the communication system 112 can even service a number of hotels 102 in a centralised fashion. The room phones 106 can be associated with a room number, for example, 2000, 2001 and 2002 shown in Figure 1. These assigned identifiers can be setup with each room phone 106. Alternatively, the assigned identifiers can be setup with the rooms 104 themselves.

Travellers can also use their mobile devices 108. The mobile devices 108 can be located within or outside of the room 104. Through a phone network 110, incoming calls can be received and outgoing calls can be made. More than one phone network 110 can be used and is not limited to a single network 110 as shown. To bypass the phone network 110, the mobile devices 108 are localised with the communication system 112.

The technology described herein can be implemented as logical operations and/or modules in one or more systems in the communication system 112 and mobile device 108. The logical operations can be implemented as a sequence of processor-implemented steps executing in one or more computer systems and as interconnected machine or circuit modules within one or more computer systems. Likewise, the descriptions of various component modules can be provided in terms of operations executed or effected by the modules. The resulting implementation is a matter of choice, dependent on the performance requirements of the underlying system implementing the described technology. The logical operations making up the embodiment of the technology described herein are referred to variously as operations, steps, objects, or modules. It should be understood that logical operations can be performed in any order, unless explicitly claimed otherwise or a specific order is inherently necessitated by the claim language.

Referring now to Figure 2, a flow chart depicting exemplary processes for setting up a mobile device 108 in accordance with one aspect of the present disclosure is provided. The processes can begin at block 200. At check-in, the traveller's mobile device 108 can be configured so that its destination address is associated with a directory number at block 202. The directory number can be an internal number assigned against a room 104 and the destination address can be a phone number.

At block 204, the communication system 112 can associate the directory number to the room phone number. The directory number can be associated with the hotel room phone 106 regardless of whether there is a physical phone 106 present in the room 104. The processes can end at block 206. For purposes of illustration, Figure 4 is an illustrative table showing information for the device 108 at setup in accordance with one aspect of the present disclosure. In this illustration, Paul Pea, a traveller, checks into the hotel 102 for the duration of a Vegetable Marketing Conference. At check-in, the customer service representative can update the directory number configuration for the room 104 with Paul's mobile phone destination address.

The device 108 can be authorised using two approaches. In some embodiments, a media access control (MAC) address of the device 108 can be used. The MAC address can be stored within the communication system 112 at check-in. Alternatively, the MAC address can be preprogrammed into the communication system 112 such that a personal profile can be maintained for the traveller. The MAC address can be used for a single VoIP client on top of a mobile device 108 associated with a room 104. In the illustration shown, Paul Pea has been checked into suite 2001 104 and his MAC address information has been stored. The directory number of 20011 has been configured against room number 2001.

In some embodiments, for security considerations, the MAC address can be used to restrict network access. When the MAC address is known in advance it is simply added to an accepted MAC address list. In some embodiments, the MAC address can become known during the initial access and upon personal identification number (PIN) validation. The MAC address can be added to the traveller's profile, which can be the same logic to update the accepted MAC address list.

One drawback for using the MAC addresses, however, is assigning several devices 108 to a room 104 becomes difficult. For example, when Josh Bean has several devices 108 that are to be assigned with a room 104, the amount of work linking the devices 108 increases. Generally, the configuration processes described above are optional if a PIN is used to establish the association. Processes for localizing the devices 108 using both the MAC addresses and PIN will be described below.

Figure 3 provides a flow chart showing exemplary processes for localizing the mobile device 108 in accordance with one aspect of the present disclosure. The processes can begin at block 300. At block 302, the communication system 112 can receive login information. The first time the mobile device 108 attempts to access the communication system 112, the user can be redirected to a hotel login page, which is a standard practice in hotels 102 today. The hotel login page can provide information and setup instructions for the VoIP client.

Continuing with the illustration provided above, Paul can connect to the hotel's network and download the VoIP client from the hotel login page typically through a default access portal. Before allowing the mobile device 108 to download the VoIP client, at decision block 304, the communication system 112 can determine what type of mobile device 108 is being used. When the communication system 112 cannot determine the type of device 108, the system 112 can allow the user to select the type of device 108 at block 306. In some embodiments, a MAC address of the device 108 can be used to identify the device manufacturer. The user can also select the type of device from a list which can be narrowed, if possible, using the MAC address.

At block 308, the communication system 112 can provide the appropriate VoIP client to the mobile device 108. After receiving the VoIP client, the mobile device 108 can download and install the VoIP client. The VoIP client can be preconfigured with all information required to connect to the communication system 112. The VoIP client can use the default configuration and the mobile phone destination address to register with the hotel communication system 112. These configurations are common to the VoIP clients that access the hotel communication system 112 and identify network access protocol, for example, IP addresses and registration/security settings. Typically, this creates a uniform VoIP client between devices 108 that are to be localised to the communication system 112.

The association between a VoIP client operating on a device 108 and a room phone 106 can be accomplished using the dynamic extension functionality and the mobile phone destination address. A PIN, MAC address or other method of identification can be utilised to associate the VoIP client to a hotel phone number regardless of the existence of a hotel phone. Typically, the device 108 can automatically obtain a VoIP client approved by the hotel communication system 112. The device 108 can be granted access to the communication system 112 seamlessly through the downloaded VoIP client.

After the VoIP client is provided to the mobile device 108, the VoIP client is linked to a room 104. This can be resolved in one of two ways, depending on the authentication and validation process in use both of which use the VoIP client to initiate a data query. At decision block 310, the communication system 112 can determine whether a MAC address or PIN has been used to link the VoIP client to the room 104. At block 312, the VoIP client can use the device MAC address to query the traveller profile database to obtain the room number, which was setup in the processes shown in Figure 2. At block 314, the VoIP client can prompt for the PIN provided at check-in, which is then used to query the traveller profile database and room number. As described earlier, a PIN number can be used by multiple travellers within the same room 104.

With the room number now known, i.e. assigned identifier, and a reasonable measure of login security provided through the MAC or PIN verification used for data lookup, the communication system 112 can optionally allow other mobile devices 108 to query for directory numbers within a suite ring group at block 316. Through the directory numbers, the mobile devices 108 can also link themselves with the room number. Turning to Figure 5, an illustrative table depicting information for multiple devices 108 connected with the communication system 112 in accordance with one aspect of the present disclosure is provided.

To link other devices 108, a second data query to obtain a directory number can be used. For example, Josh Bean can be provided a PIN when initially checking into the hotel 102. Using the PIN, Josh can link numerous devices 108 to the room 104 as shown. Directory numbers can be configured against the room number on the communication system 112, for example, directory number 20021, 20022 and 20023. These directory numbers can already exist and are programmed within the suite ring group on the communication system 112. Each suite can have several preconfigured directory numbers associated with it to accommodate multiple travellers per room 104. In the case of a session initiation protocol (SIP), multiple devices 108 can register using the same number. The SIP protocol can fork calls to all the devices 108 using the same suite directory number.

Continuing with Figure 3, at block 318, the communication system 112 can admit the mobile devices 108 into service using the directory numbers previously retrieved. Phone services can be provided to the mobile devices 108 at block 320. For example, when calls to the room 104 are received, the communication system 112 can also alert the VoIP client operating on the mobile device 108. When calls originate from the device 108, the traveller can have the option per standard dual mode phones to initiate the call through the communication system 112. This can allow outgoing calls to appear as though they are originating from the room 104. Known to those skilled in the relevant art, a single number identity is a common practice for ring groups. Typically, any mobile device 108 communication thereafter utilises the VoIP client and hotel communication system 112 via the dynamic extension instead of the using the phone network 110. In the illustration, Paul Pea and Josh Bean can use their devices 108 to place or receive calls through the hotel communication system 112 automatically. In some embodiments, the VoIP client can also configure the mobile device 108 to force forward calls placed directly to the mobile phone destination address to the dynamic extension destination address.

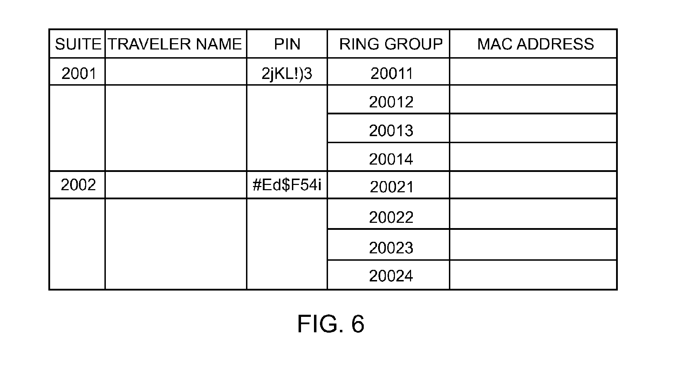

Upon check-out, the user's mobile phone destination can be disabled from the communication system 112 as the dynamic extension and the VoIP client registration are disconnected at block 322. In some embodiments, the configured PIN for the hotel room can be changed and that used by the VoIP client is no longer valid. This can be done automatically by the communication system 112 as part of the check-out process. In the illustration, Paul Pea and Josh Bean can check-out of the hotel 102 and continue to use their mobile devices 108 normally whereby calls can be placed and received using the phone network 110. On check-out, the PIN that is contained in the traveller profile database and is associated with the room 104 can be regenerated. Figure 6 is an illustrative table with the information removed in accordance with one aspect of the present disclosure. The processes can end at block 324.

As shown above, to localise devices 108 with the communication system 112 and thereby removing the need to use the phone network 110, the VoIP client can access the traveller's profile using a MAC address as a key or PIN. Thereafter, the traveller's profile can be accessed to obtain the room number assigned to the traveller. Optionally, queries can be provided to the communication system 112 for additional available directory numbers within a suite ring group. Generally, the communication system 112 does not require a programming change. As such, new devices 108 associated with different travellers can be integrated into the communication system 112 without configuration overhead.

As shown above, once the VoIP client has been installed, user involvement or awareness is not required. Frequent travellers who stay at the same hotel 102 or chain can automatically be accepted into the communication system 112 at check-in with no additional actions. The VoIP client can also grant the mobile device 108 additional network access and features while registered. For example, the mobile device 108 can be directed to an alternate internet portal that bypasses the usual login at the hotel login page. While the VoIP client is normally disassociated or disabled at check-out, this can be performed at a different time to allow for an early check-out where the traveller does not vacate the room until later in the day.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are d intended to be encompassed by the claims. Moreover, nothing disclosed herein is intended to be dedicated to the public regardless of whether such disclosure is explicitly recited in the claims.

## Claims

1. A communication system for use within a lodging facility, the communication system being configured to:
receive a request for access to a traveller's profile from at least one device;
provide a room number within said lodging facility associated with said traveller's profile to said at least one device in response to said request;
associate a destination address of said at least one device with a directory number of said room number;
route communications through said destination address through said directory number to said at least one device;
remove said destination address of said at least one device associated with said directory number of said room number.

2. The communication system of claim 1, configured to receive a request for access to said traveller's profile from at least one additional device and associate a destination address of said at least one additional device with another directory number of said room number.

3. The communication system of claim 1 or claim 2, wherein said room number is associated with multiple directory numbers with said multiple directory numbers programmed within a suite ring group for accommodating multiple devices.

4. The communication system of any preceding claim, wherein said room number is associated with a single directory number with said single directory number is used to route calls to multiple devices.

5. The communication system of any preceding claim, configured to route communications through said destination address to said at least one device by transferring calls made to said room number to said at least one device through said communication system and transferring calls made from said at least one device through said communication system.

6. A method for localizing devices to a communication system, said method comprising:
installing a VoIP client;
querying said communication system for an assigned identifier;
obtaining a directory number that is configured against said assigned identifier;
registering with said communication system through said directory number;
providing communication services through said VoIP client after registration; and
disabling said VoIP client.

7. The method of claim 1, wherein querying said communication system, obtaining said directory number, registering said VoIP client and providing said communication services comprise using default configurations provided by said VoIP client, or wherein querying said communication system for said assigned identifier comprises providing a media access control address to a profile database on said communication system to obtain said assigned identifier, or wherein querying said communication system for said assigned identifier comprises providing a personal identification number to a profile database on said communication system to obtain said assigned identifier.

8. The method of claim 7, wherein providing said communication services comprises transmitting outgoing calls and receiving incoming calls through said communication system.

9. A branch exchange providing a client application for operation on said at least one device, said client application being configured to associate a destination address of said at least one device to a directory number that is configured against an assigned identifier on said branch exchange to handle said communications.

10. The system of claim 9, wherein said branch exchange is configured to authorise said at least one device through a media access control address provided by said at least one device, and optionally wherein said media access control address is associated with a preferred profile.

11. The system of claim 9, wherein said branch exchange is configured to authorise said at least one device through a personal identification number provided by said at least one device.

12. The system of any of claims 9 to 11, wherein said branch exchange is configured to provide said client application for operation on said at least one device by being configured to redirect said at least one device to a login page when said at least one device initially connects with said branch exchange, or alternatively by being configured to determine which client application to provide based on a media access control address provided by said at least one device.

13. The system of any of claims 9 to 12, wherein said client application comprises configuration information used by said at least one device when connected with said branch exchange, and optionally wherein said configuration information comprises network access protocols, IP addresses and registration/security settings.

14. The system of any of claims 9 to 13, configured to retrieve said directory number by using a media access control address of said at least one device to query a traveller profile database for said directory number.

15. The system of any of claims 9 to 13, configured to retrieve said directory number by using a personal identification number to query a traveller profile database for said directory number.
